(19) Europäisches Patentamt
European Patent Office
Office européen des brevets

(11) **EP 2 876 918 A1**

(12) **EUROPEAN PATENT APPLICATION**
published in accordance with Art. 153(4) EPC

(43) Date of publication:
**27.05.2015 Bulletin 2015/22**

(21) Application number: **12881563.6**

(22) Date of filing: **23.07.2012**

(51) Int Cl.:
***H04W 16/28*** (2009.01)

(86) International application number:
**PCT/CN2012/079068**

(87) International publication number:
**WO 2014/015471 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **YE, Zhangxiang**
**Shenzhen**
**Guangdong 518129 (CN)**

• **CHEN, Xufeng**
**Shenzhen**
**Guangdong 518129 (CN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **METHOD AND DEVICE FOR DETERMINING AZIMUTH**

(57)    The present invention discloses a method and an apparatus for determining an azimuth, which relates to the field of communications and can improve accuracy of azimuth measurement. The azimuth determining method includes: taking a source base station as a circular center and obtaining location information of terminals within a preset radius and identification information of service cells of the terminals; determining, according to the location information of the terminals and the identification information of the service cells of the terminals, a correspondence relationship between each unit sector and a cell covered by the source base station, where the unit sectors are obtained by dividing, based on a preset angle, a circle, of which a center is the source base station and a radius is the preset radius; and determining, according to the correspondence relationship between unit sectors and cells covered by the source base station, an estimated azimuth value of a cell covered by the source base station. Embodiments of the present invention are mainly applicable to measurement of an azimuth of a base station.

201 → Take a source base station as a circular center and obtain location information of terminals within a preset radius and identification information of service cells of the terminals

202 → Determine, according to the location information of the terminals and the identifier information of the service cells of the terminals, a correspondence relationship between each unit sector and a cell covered by the source base station

203 → Determine, according to the correspondence relationships between unit sectors and cells covered by the source base station, an estimated azimuth value of a cell covered by the source base station

FIG. 2

EP 2 876 918 A1

**Description**

**TECHNICAL FIELD**

The present invention relates to the field of communications, and in particular, to a method and an apparatus for determining an azimuth.

**BACKGROUND**

In a radio communications system, an antenna azimuth of a base station is configured to ensure a coverage range and communication quality of the base station. In actual operation, an azimuth of a base station may be deviated from a preset azimuth value, which causes deterioration of communication quality. Therefore, it is necessary to estimate an azimuth of a base station in actual operation, so as to adjust a deviated azimuth.

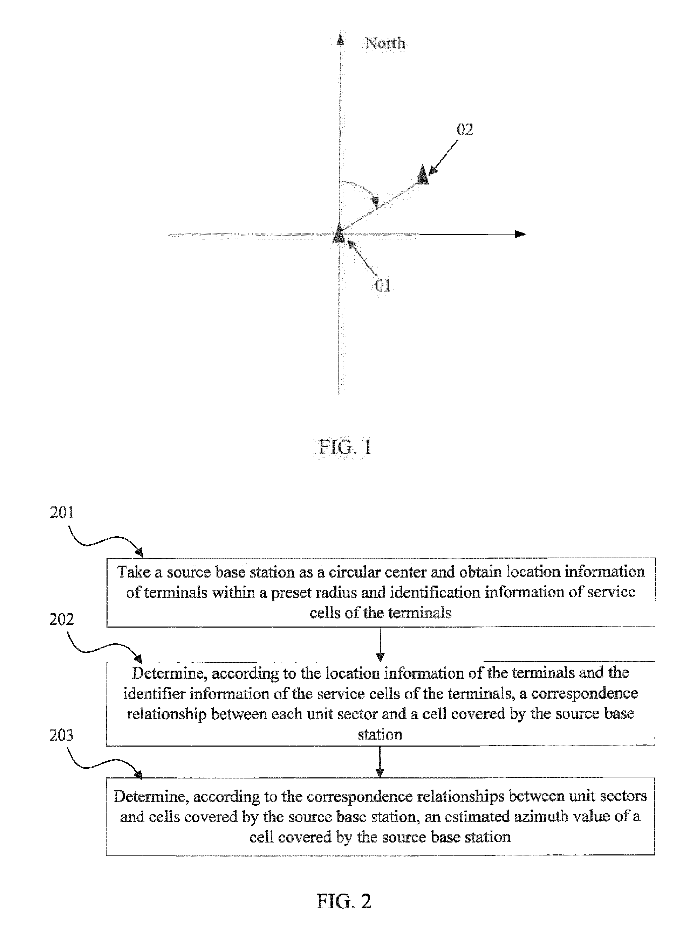

The prior art provides an azimuth determining solution, through which an estimated azimuth value of a source cell base station can be obtained. Steps of the solution are as follows: select several sampling points in neighboring cells of the source cell base station, where the sampling points correspond to one or more sampling point base stations; calculate a relative azimuth of each sampling point base station; and calculate an average value of the obtained relative azimuths to obtain an estimated azimuth value of the source cell base station. The relative azimuth herein refers to an angle between a line from each sampling point base station to the source cell base station and due north. As shown in FIG. 1, a source cell base station 01 is taken as a center to establish a coordinate system, and the angle between a line from a sampling point base station 02 to the source cell base station 01 and due north is a relative azimuth of the sampling point base station 02.

The prior art has at least the following problem:

Since an azimuth of a source cell base station is measured only by using relative azimuths between the source cell base station and surrounding sampling point base stations, the obtained measurement result is inaccurate and subject to great error.

**SUMMARY**

Embodiments of the present invention provide a method and an apparatus for determining an azimuth, which can improve accuracy of azimuth measurement and reduce an error, so as to provide a reliable judgment basis for azimuth adjustment.

To achieve the foregoing objective, the embodiments of the present invention adopt the following technical solutions:

An azimuth determining method includes:

taking a source base station as a circular center and obtaining location information of terminals within a preset radius and identification information of service cells of the terminals, wherein the service cells of the terminals are one of cells covered by the source base station;

determining, according to the location information of the terminals and the identification information of the service cells of the terminals, a correspondence relationship between each unit sector and a cell covered by the source base station, wherein the unit sectors are obtained by dividing, based on a preset angle, a circle, of which a center is the source base station and a radius is the preset radius; and

determining, according to the correspondence relationship between unit sectors and cells covered by the source base station, an estimated azimuth value of a cell covered by the source base station.

An azimuth determining apparatus includes:

an information obtaining unit, configured to take a source base station as a circular center and obtain location information of terminals within a preset radius and identification information of service cells of the terminals, wherein the service cells of the terminals are one of cells covered by the source base station;

a correspondence relationship determining unit, configured to determine, according to the location information of the terminals and the identification information of the service cells of the terminals, a correspondence relationship between each unit sector and a cell covered by the source base station, wherein the unit sectors are obtained by dividing, based on a preset angle, a circle, of which a center is the source base station and a radius is the preset radius; and

an azimuth measuring unit, configured to determine, according to the correspondence relationship between unit sectors and cells covered by the source base station, an estimated azimuth value of a cell covered by the source base station.

The embodiments of the present invention provide a method and an apparatus for determining an azimuth, a correspondence relationship between each unit sector and a cell covered by a source base station is determined according to location information of terminals and identification information of service cells of the terminals, and then, an estimated azimuth value of a cell covered by the source base station is determined according to the correspondence relationship, so as to improve the accuracy of azimuth measurement and provide a reliable judgment basis for azimuth adjustment.

**BRIEF DESCRIPTION OF DRAWINGS**

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.

FIG. 1 is a schematic diagram of determining an azimuth in a prior art;
FIG. 2 is a flowchart of an azimuth determining method according to Embodiment 1 of the present invention;
FIG. 3 is a schematic diagram of determining correspondence relationships between unit sectors and cells covered by a source base station according to Embodiment 1 of the present invention;
FIG. 4 is a flowchart of an azimuth determining method according to Embodiment 2 of the present invention;
FIG. 5 is a schematic diagram of determining correspondence relationships between unit sectors and cells covered by a source base station according to Embodiment 2 of the present invention;
FIG. 6 is a schematic diagram of obtaining unit sectors within each cell covered by a source base station according to Embodiment 2 of the present invention;
FIG. 7 is a flowchart of another azimuth determining method according to Embodiment 2 of the present invention;
FIG. 8 is a flowchart of still another azimuth determining method according to Embodiment 2 of the present invention;
FIG. 9 is a schematic diagram of determining a boundary angle according to Embodiment 2 of the present invention;
FIG. 10 is a schematic diagram of determining an azimuth according to two boundary angles;
FIG. 11 is a block diagram of an azimuth determining apparatus according to Embodiment 3 of the present invention;
FIG. 12 is a block diagram of a correspondence relationship determining unit according to Embodiment 3 of the present invention;
FIG. 13 is a block diagram of an azimuth measuring unit according to Embodiment 3 of the present invention;
FIG. 14 is a block diagram of another azimuth determining apparatus according to Embodiment 3 of the present invention;
FIG. 15 is a block diagram of another azimuth measuring unit according to Embodiment 3 of the present invention; and
FIG. 16 is a block diagram of still another azimuth measuring unit according to Embodiment 3 of the present invention.

**DESCRIPTION OF EMBODIMENTS**

The following clearly describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

**Embodiment 1**

An embodiment of the present invention provides an azimuth determining method, and as shown in FIG. 2, the method includes the following steps:
201. Take a source base station as a circular center and obtain location information of terminals within a preset radius and identification information of service cells of the terminals.
Before this step, it is necessary to determine a source base station of which an azimuth needs to be measured and take the source base station of which the azimuth needs to be determined as the circular center in step 201.
Each of the service cells of the terminals is one of cells covered by the source base station.
202. Determine, according to the location information of the terminals and the identification information of the service cells of the terminals, a correspondence relationship between each unit sector and a cell covered by the source base station.

The unit sectors are obtained by dividing, based on a preset angle, a circle, of which a center is the source base station and a radius is the preset radius. For example, the preset angle may be as follows: if a whole circle is equally divided by 360, a unit sector is a sector of 1°. Nevertheless, in actual applications, other dividing manners may be used without limitation to this example.

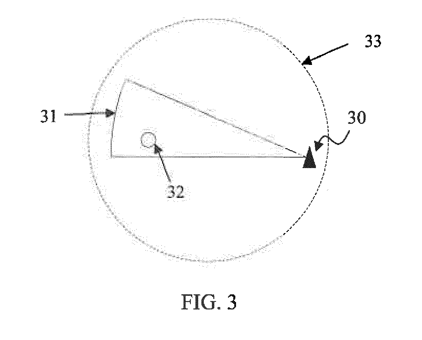

Because the location information of the terminals and the identification information of the service cells of the terminals have been obtained in step 201, terminals existing in each unit sector and service cells of these terminals can be obtained. For example, as shown in FIG. 3, with a source base station 30 as a circular center, there is a unit sector 31. A terminal 32 exists in the unit sector 31. According to the identification information of the service cells of the terminals, it is learned that the terminal 32 is served a cell 33 covered by the source base station 30. Therefore, a correspondence relationship between the unit sector 31 and the cell 33 can be determined.

203. Determine, according to the correspondence relationship between unit sectors and cells covered by the source base station, an estimated azimuth value of a cell covered by the source base station.

Through step 202, the correspondence relationship between unit sectors and cells covered by the source base station is obtained, and therefore, which unit sectors exist within each cell covered by the source base station can be known. Further, through step 203, an azimuth of each cell covered by the source base station can be estimated.

After the estimated azimuth value is obtained, the estimated value is compared with azimuth data in originally planned working parameters. If a difference between the two exceeds a preset threshold, an error is considered to exist in the azimuth data of working parameters, and onsite adjustment is needed and new working parameters are determined. If the difference does not exceed the preset threshold, the azimuth data of working parameters is correct and does not need to be adjusted.

The embodiment of the present invention provides an azimuth determining method, where, a correspondence relationship between each unit sector and a cell covered by a source base station is determined according to location information of terminals and identification information of service cells of the terminals, and then, an estimated azimuth value of a cell covered by the source base station is determined according to the correspondence relationship, so as to improve accuracy of azimuth measurement and provide a reliable judgment basis for azimuth adjustment.

**Embodiment 2**

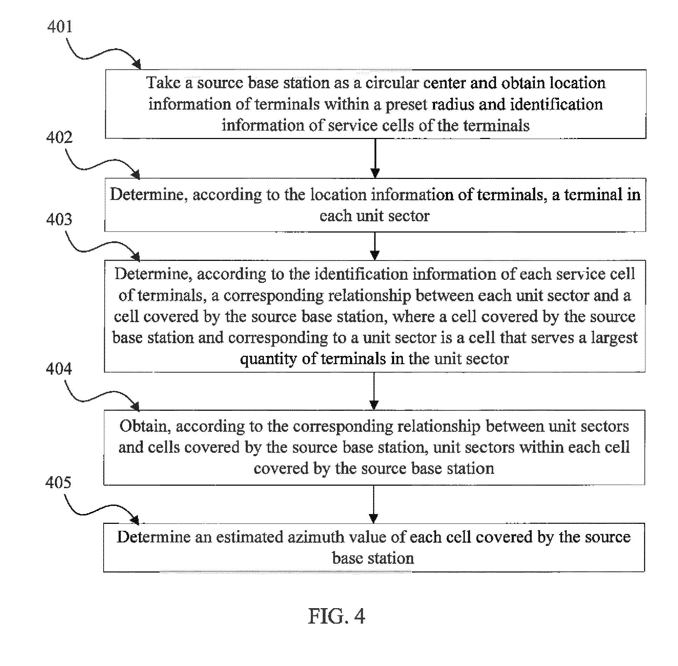

An embodiment of the present invention provides an azimuth determining method, and as shown in FIG. 4, the method includes the following steps:

401. Take a source base station as a circular center and obtain location information of terminals within a preset radius and identification information of service cells of the terminals.

Before this step, it is necessary to determine a source base station of which an azimuth needs to be measured and take the source base station of which the azimuth needs to be determined as the circular center in step 401.

Each of the service cells of the terminals is one of cells covered by the source base station.

402. Determine, according to the location information of the terminals, terminals in each unit sector.

The unit sectors are obtained by dividing, based on a preset angle, a circle, of which a center is the source base station and a radius is the preset radius. For example, the preset angle may be as follows: if a whole circle is equally divided by 360, a unit sector is a sector of 1°. Nevertheless, in actual applications, other divisions may be used without limitation to this example.

403. Determine, according to the identification information of service cell of the terminals, a correspondence relationship between each unit sector and a cell covered by the source base station, where a cell covered by the source base station and corresponding to each unit sector is a cell that serves a largest number of terminals in the unit sector.

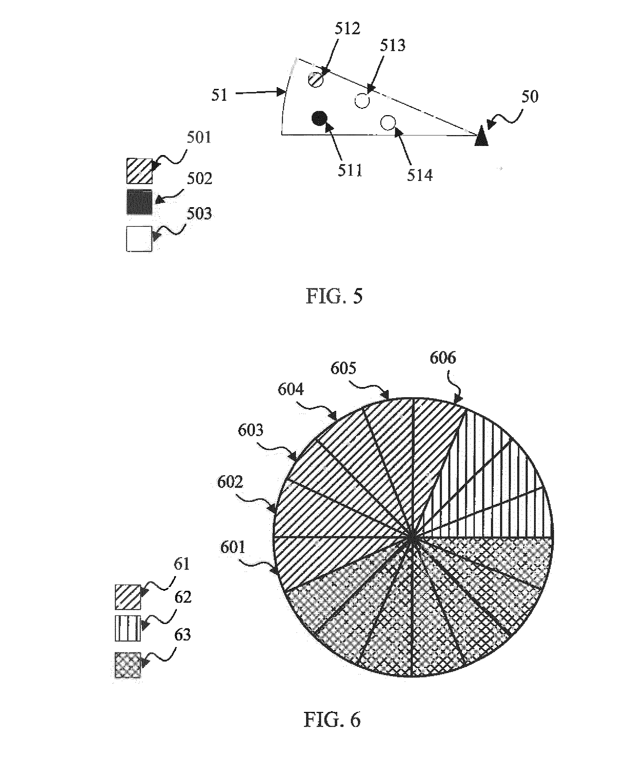

The following gives an example to describe the foregoing steps 401 to 403. As shown in FIG. 5, with a source base station 50 as a circular center, there is a unit sector 51. Terminals 511, 512, 513 and 514 exist in the unit sector 51. According to the identification information of the service cells of the terminals, it is learned that the terminal 511 is served by a cell 501 covered by the source base station 50, the terminal 512 is served by a cell 502 covered by the source base station 50, and the terminals 513 and 514 are served by a cell 503 covered by the source base station 50. The cell 503 serves a largest number of terminals in the unit sector 51, and therefore a correspondence relationship between the unit sector 51 and the cell 503 can be determined.

404. Obtain, according to the correspondence relationship between unit sectors and cells covered by the source base station, unit sectors within each cell covered by the source base station.

Step 404 is described with reference to FIG. 6. A base station in FIG. 6 covers three cells, namely, 61, 62 and 63. In FIG. 6, a circle centered on the source base station is divided by 16 to obtain 16 unit sectors. Assuming that a cell 61 is a cell which serves a largest number of terminals in all unit sectors 601 to 606, it can be learned that unit sectors within the cell 61 are 601, 602, 603, 604, 605, and 606.

405. Determine an estimated azimuth value of each cell covered by the source base station.

Specifically, according to formula (1):

$$\overline{\alpha}i1 = \text{atan}(\frac{1}{n} \sum_{j=1}^{n} \sin\alpha_j , \frac{1}{n} \sum_{j=1}^{n} \cos\alpha_j ),$$

an estimated azimuth value $\overline{\alpha}i1$ of an $i^{th}$ cell covered by the source base station is obtained, where in formula (1), n is the number of unit sectors within the $i^{th}$ cell and $\alpha_j$ is an azimuth of a $j^{th}$ unit sector of the n unit sectors, where the azimuth of the unit sector is an angle between an angular bisector of the unit sector and due north in a clockwise direction. According to the above formula, an estimated azimuth value of each cell covered by a source base station can be obtained.

With reference to the scenario illustrated in FIG. 6, an estimated azimuth value of the cell 61 covered by the source base station is calculated specifically according to formula (1):

$$\overline{\alpha}i1 = \text{atan}(\frac{1}{6} \sum_{j=1}^{6} \sin\alpha_j , \frac{1}{6} \sum_{j=1}^{6} \cos\alpha_j ),$$

where, $\alpha_1$ to $\alpha_6$ are respectively azimuths of the unit sectors 601 to 606.

In the embodiment of the present invention, the estimated azimuth value of the cell 61 is obtained with reference to the unit sectors 601 to 606 in FIG. 6. In an actual application, the division granularity of unit sectors may be smaller, for example, 360 equal divisions with each unit sector being 1°, so that a more accurate estimated azimuth value can be obtained.

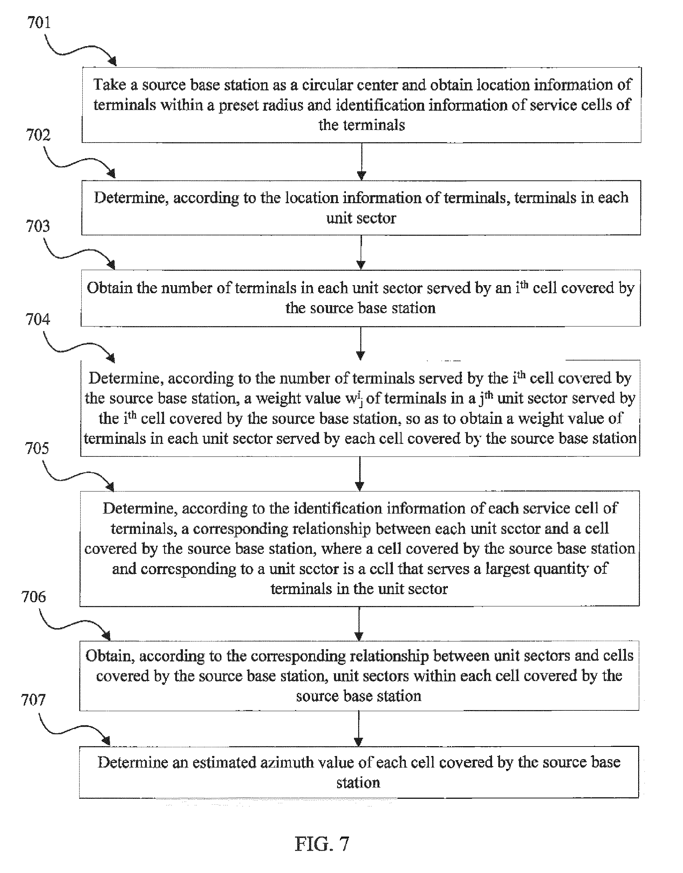

In addition, based on FIG. 4, the embodiment of the present invention provides another azimuth determining method. As shown in FIG. 7, the method includes the following steps:

701. Take a source base station as a circular center and obtain location information of terminals within a preset radius and identification information of service cells of the terminals.

The service cells of the terminals are one of cells covered by the source base station.

702. Determine, according to the location information of the terminals, terminals in each unit sector.

703. Obtain the number of terminals in each unit sector that are served by an $i^{th}$ cell covered by the source base station.

After terminals in each unit sector are determined, the number of terminals in each unit sector that are served by each of the service cells of the terminals can be determined according to the identification information of the service cells of the terminals.

704. Determine, according to the number of terminals that are served by the $i^{th}$ cell covered by the source base station, a weight value $w^i_j$ of terminals in a $j^{th}$ unit sector that are served by the $i^{th}$ cell covered by the source base station, so as to obtain a weight value of terminals in each unit sector that are served by each cell covered by the source base station.

$w^i_j = N^i_j/w^T_j$, where $N^i_j$ is the number of terminals in the $j^{th}$ unit sector that are served by the $i^{th}$ cell covered by the source base station and $N^T_j$ is the number of terminals in the $j^{th}$ unit sector that are served by all cells covered by the source base station.

705. Determine, according to the identification information of service cell of the terminals, a correspondence relationship between each unit sector and a cell covered by the source base station, where a cell covered by the source base station and corresponding to each unit sector is a cell that serves a largest number of terminals in the unit sector.

706. Obtain, according to the correspondence relationship between unit sectors and cells covered by the source base station, unit sectors within each cell covered by the source base station.

707. Determine an estimated azimuth value of each cell covered by the source base station.

Specifically, after a weight value of terminals in each unit sector that are served by the $i^{th}$ cell covered by the source base station is obtained, an estimated azimuth value of each cell covered by the source base station is determined. Formula (2):

$$\overline{\alpha}i2 = \text{atan}[(1/\sum_{j=1}^{n} w^i_j)\sum_{j=1}^{n} w^i_j \sin\alpha_j , (1/\sum_{j=1}^{n} w^i_j)\sum_{j=1}^{n} w^i_j \cos\alpha_j ],$$

may be used to determine an estimated azimuth value $\overline{\alpha}i2$ of the $i^{th}$ cell covered by the source base station, where, in formula (2), n is the number of unit sectors within the $i^{th}$ cell covered by the source base station and $\alpha_j$ is an azimuth of the $j^{th}$ unit sector of the n unit sectors, where the azimuth of the $j^{th}$ unit sector is an angle between an angular bisector of the $j^{th}$ unit sector and due north in a clockwise direction.

With reference to the scenario illustrated in FIG. 6, $w^i_j$ is described through an example. It is assumed that, in the unit sector 601, $N_1$ terminals are that are served by the cell 61 covered by the source base station, $N_2$ terminals are that are served by a cell 62, and $N_3$ terminals are that are served by a cell 63. Then, a weight value of terminals that are served by the cell 61 is $w^{61}_{601} = N_1/(N_1+N_2+N_3)$. In this way, the weight value of terminals that are served by the cell 61 in each unit sector can be obtained. The weight values of terminals are substituted into formula (2), and $\overline{\alpha i2}$ of the covered cell 61 can be obtained.

Because weight values of terminals are introduced into formula (2), accuracy of azimuth measurement is further improved.

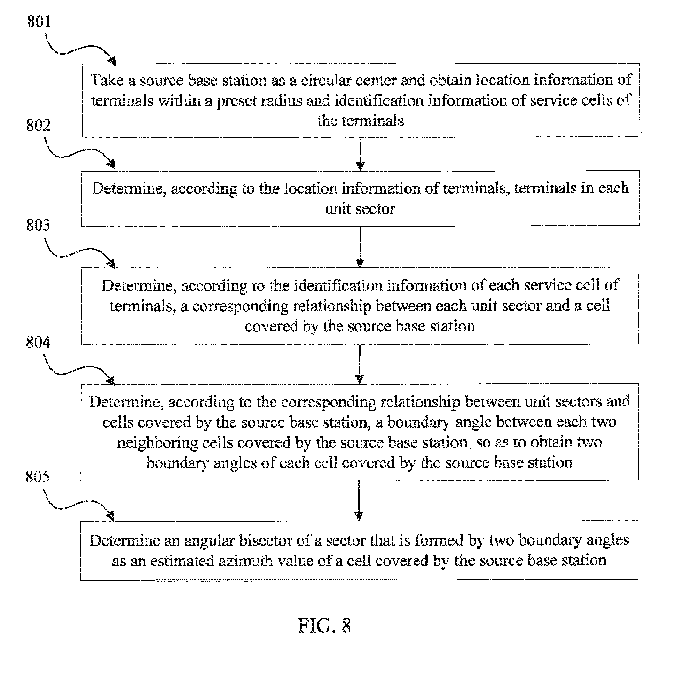

In another aspect, the embodiment of the present invention further provides another azimuth determining method. As shown in FIG. 8, the method includes the following steps:

801. Take a source base station as a circular center and obtain location information of terminals within a preset radius and identification information of service cells of the terminals.

802. Determine, according to the location information of the terminals, terminals in each unit sector.

803. Determine, according to the identification information of service cell of the terminals, a correspondence relationship between each unit sector and a cell covered by the source base station.

A cell covered by the source base station and corresponding to each unit sector is a cell that serves a largest number of terminals in the unit sector.

804. Determine, according to the correspondence relationship between unit sectors and cells covered by the source base station, an angle of a boundary between each two neighboring cells covered by the source base station, so as to obtain two boundary angles of each cell covered by the source base station.

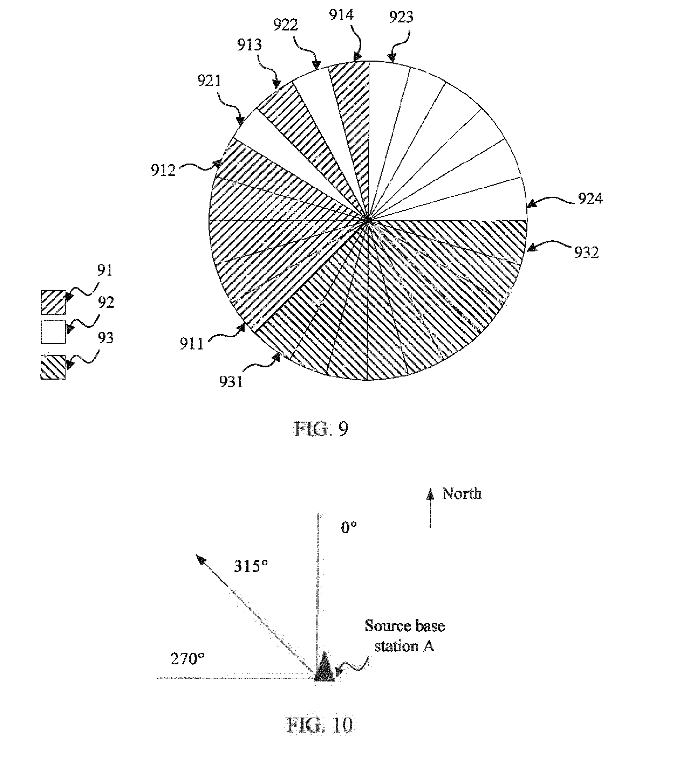

There are multiple methods for determining an angle of a boundary between each two neighboring cells covered by the source base station. The following description makes reference to FIG. 9. In FIG. 9, cells 91, 92 and 93 are covered by the source base station. According to the correspondence relationship between unit sectors and cells covered by the source base station, unit sectors within respective cells 91, 92 and 93 covered by the source base station, are obtained. An angular bisector of an acute angle that is formed by an azimuth of a unit sector 911 and an azimuth of a unit sector 931 is taken as a boundary between the cells 91 and 93. In the same way, an angular bisector of an acute angle that is formed by an azimuth of a unit sector 924 and an azimuth of a unit sector 932 is taken as a boundary between the cells 92 and 93. As for a boundary between the cells 91 and 92, as shown in the figure, there is an interval between unit sectors belonging to the two cells. In this case, the boundary between the cells 91 and 92 may be obtained by calculating an average value of azimuths of unit sectors 912, 913, 914, 921, 922 and 923. Specifically, by using formula (3),

$$\overline{\alpha i3}= atan[\frac{1}{6} (sin\alpha_{912}+ sin\alpha_{913}+ sin\alpha_{914}+ sin\alpha_{921}+ sin\alpha_{922}+ sin\alpha_{923}),$$
$$\frac{1}{6}( cos\alpha_{912}+ cos\alpha_{913}+cos\alpha_{914}+ cos\alpha_{921}+ cos\alpha_{922}+cos\alpha_{923})],$$

an angle of the boundary between the cells 91 and 92 is obtained.

In this way, two boundary angles of each cell covered by the source base station are determined.

805. Determine an angular bisector of a sector that is formed by the two boundary angles as an estimated azimuth value of the cell covered by source base station.

For example, as shown in FIG. 10, if angles between two boundaries of a cell covered by a source base station A and due north in a clockwise direction are respectively 0°and 270°, that is, if the two boundary angles are respectively 0° and 270°, it is determined according to the two boundary angles that an azimuth of the cell is 315°.

It should be noted that, in the embodiment of the present invention, the location information of the terminals and the identification information of the service cells of the terminals may be obtained through a measurement report (MR, measure report) without limitation thereto.

After the estimated azimuth value is obtained, the estimated value is compared with azimuth data in originally planned working parameters. If a difference between them exceeds a preset threshold, an error is considered to exist in the azimuth data of working parameters, and onsite adjustment is needed and new working parameters are determined. If the difference does not exceed the preset threshold, the azimuth data of working parameters is correct and does not need to be adjusted.

The embodiment of the present invention provides an azimuth determining method, where, a correspondence relationship between each unit sector and a cell covered by a source base station is determined according to location information of terminals and identification information of service cells of the terminals, and then, unit sectors within a cell covered by a source base station are determined according to the correspondence relationship, and by calculating an average value of azimuths of unit sectors or by determining boundary angles of each cell covered by the source base station, an estimated azimuth value is obtained, so as to improve accuracy of azimuth measurement and provide a reliable judgment basis for azimuth adjustment.

**Embodiment 3**

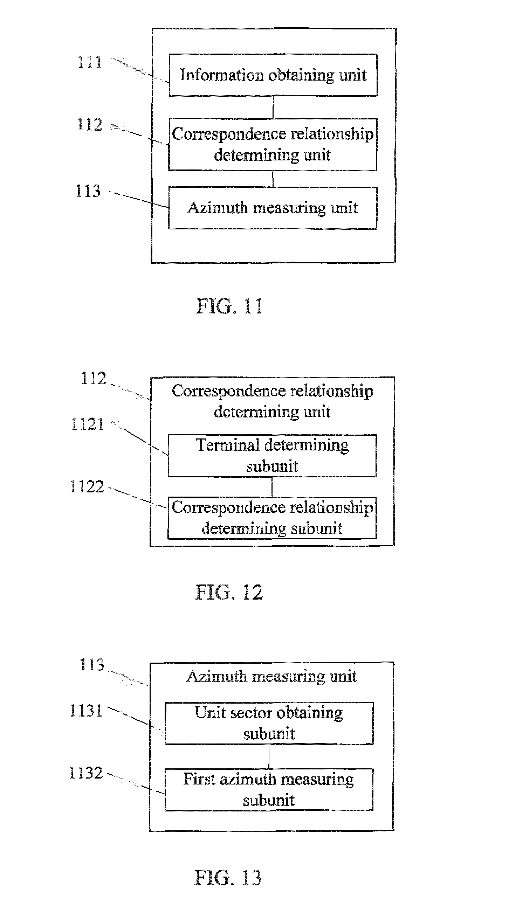

An embodiment of the present invention provides an azimuth determining apparatus. As shown in FIG. 11, the apparatus includes: an information obtaining unit 111, a correspondence relationship determining unit 112, and an azimuth measuring unit 113.

The information obtaining unit 111 is configured to take a source base station as a circular center and obtain location information of terminals within a preset radius and identification information of service cells of the terminals. The service cells of the terminals are one of cells covered by the source base station.

The correspondence relationship determining unit 112 is configured to determine, according to the location information of the terminals and the identification information of the service cells of the terminals, a correspondence relationship between each unit sector and a cell covered by the source base station, where the unit sectors are obtained by dividing, based on a preset angle, a circle, of which a center is the source base station and a radius is the preset radius.

The azimuth measuring unit 113 is configured to determine, according to the correspondence relationship between unit sectors and cells covered by the source base station, an estimated azimuth value of a cell covered by the source base station.

It should be noted that the information obtaining unit 111 may be specifically configured to obtain the location information of the terminals and the identification information of the service cells of the terminals through a measurement report MR. An RNC (Radio Network Controller, radio network controller) collects location information of the terminals and identification information of the service cells of the terminals, and transmits the information to the information obtaining unit 111.

Further, as shown in FIG. 12, the correspondence relationship determining unit 112 specifically includes: a terminal determining subunit 1121 and a correspondence relationship determining subunit 1122.

The terminal determining subunit 1121 is configured to determine, according to the location information of the terminals, terminals in each unit sector.

The correspondence relationship determining subunit 1122 is configured to determine, according to the identification information of service cell of the terminals, the correspondence relationship between each unit sector and a cell covered by the source base station, where a cell covered by the source base station and corresponding to each unit sector is a cell that serves a largest number of terminals in the unit sector.

Further, as shown in FIG. 13, the azimuth measuring unit 113 specifically includes: a unit sector obtaining subunit 1131 and a first azimuth measuring subunit 1132.

The unit sector obtaining subunit 1131 is configured to obtain, according to the correspondence relationship between unit sectors and cells covered by the source base station, unit sectors within each cell covered by the source base station.

The first azimuth measuring subunit 1132 is configured to determine, according to a formula

$$\overline{\alpha}i1 = \operatorname{atan}\left(\frac{1}{n}\sum_{j=1}^{n} \sin\alpha_j , \ \frac{1}{n}\sum_{j=1}^{n} \cos\alpha_j\right),$$

an estimated azimuth value $\overline{\alpha}i1$ of an $i^{th}$ cell covered by the source base station, where n is the number of unit sectors within the $i^{th}$ cell and $\alpha_j$ is an azimuth of a $j^{th}$ unit sector of the n unit sectors, where the azimuth of the unit sector is an angle between an angular bisector of the unit sector and due north in a clockwise direction.

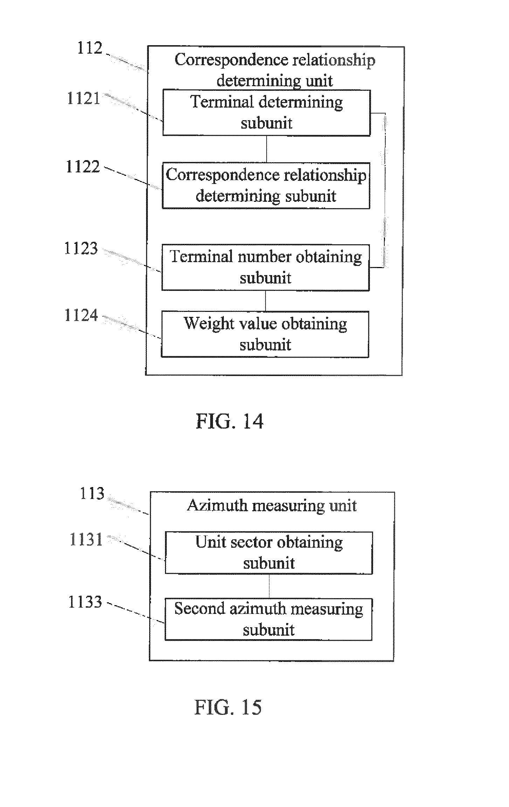

As shown in FIG. 14, the correspondence relationship determining unit 112 further includes a terminal number obtaining subunit 1123 and a weight value obtaining subunit 1124.

The terminal number obtaining subunit 1123 is configured to obtain the number of terminals in each unit sector that are served by an $i^{th}$ cell covered by the source base station.

The weight value obtaining subunit 1124 is configured to determine, according to the number of terminals that are served by the $i^{th}$ cell covered by the source base station, a weight value $w_j^i$ of terminals in a $j^{th}$ unit sector that are served by the $i^{th}$ cell covered by the source base station, so as to obtain a weight value of terminals in each unit sector that are served by each cell covered by the source base station, where $w_j^i = N_j^i/N_j^T$, where $N_j^i$ is the number of terminals in the $j^{th}$ unit sector that are served by the $i^{th}$ cell covered by the source base station and $N_j^T$ is the number of terminals in the $j^{th}$ unit sector that are served by all cells covered by the source base station.

Based on the correspondence relationship determining unit 112 shown in FIG. 14, as shown in FIG. 15, the azimuth measuring unit 113 specifically includes: a unit sector obtaining subunit 1131 and a second azimuth measuring subunit 1133.

The unit sector obtaining subunit 1131 is configured to obtain, according to the correspondence relationship between unit sectors and cells covered by the source base station, unit sectors within each cell covered by the source base station.

The second azimuth measuring subunit 1133 is configured to determine, according to a formula

$$\bar{\alpha}i2= atan[(1/\sum_{j=1}^{n} w_j^i)\sum_{j=1}^{n} w_j^i \sin\alpha_j , (1/\sum_{j=1}^{n} w_j^i)\sum_{j=1}^{n} w_j^i \cos\alpha_j ],$$

an estimated azimuth value $\bar{\alpha}i2$ of the $i^{th}$ cell covered by the source base station, where n is the number of unit sectors within the $i^{th}$ cell covered by the source base station and $\alpha_j$ is an azimuth of the $j^{th}$ unit sector of the n unit sectors, where the azimuth of the unit sector is an angle between an angular bisector of the $j^{th}$ unit sector and due north in a clockwise direction.

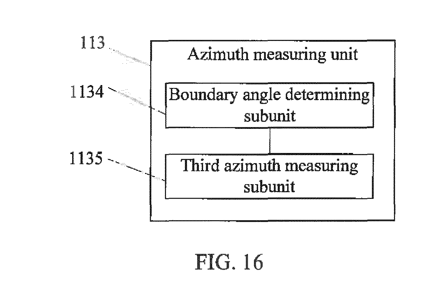

In addition, as shown in FIG. 16, the azimuth measuring unit 113 specifically includes: a boundary angle determining subunit 1134 and a third azimuth measuring subunit 1135.

The boundary angle determining subunit 1134 is configured to determine, according to the correspondence relationship between unit sectors and cells covered by the source base station, an angle of a boundary between each two neighboring cells covered by the source base station, so as to obtain two boundary angles of each cell covered by the source base station.

The third azimuth measuring subunit 1135 is configured to determine an angular bisector of a sector that is formed by the two boundary angles as the estimated azimuth value of the cell covered by source base station. The apparatus in the embodiment of the present invention may be integrated into a hardware device such as a computer or a server. Further, functions of a part of or all units in the apparatus may be integrated into a processor.

After the estimated azimuth value is obtained, the estimated value is compared with azimuth data in originally planned working parameters. If a difference between them exceeds a preset threshold, an error is considered to exist in the azimuth data of working parameters, and onsite adjustment is needed and new working parameters are determined. If the difference does not exceed a preset threshold, the azimuth data of working parameters is correct and does not need to be adjusted.

The embodiment of the present invention provides an azimuth determining apparatus, which determines, according to location information of terminals and identification information of service cells of the terminals, a correspondence relationship between each unit sector and a cell covered by a source base station, and then determines, according to the correspondence relationship, unit sectors within a cell covered by a source base station, and obtains, by calculating an average value of azimuths of unit sectors or determining boundary angles of each cell covered by the source base station, an estimated azimuth value, so as to improve accuracy of azimuth measurement and provide a reliable judgment basis for azimuth adjustment.

The embodiment of the present invention also provides a multimedia memory, where the multimedia memory stores the following code:

code for taking a source base station as a circular center and obtaining location information of terminals within a preset radius and identification information of service cells of the terminals, where the service cells of the terminals are one of cells covered by the source base station;
code for determining, according to the location information of the terminals and the identification information of the service cells of the terminals, a correspondence relationship between each unit sector and a cell covered by the source base station, where the unit sectors are obtained by dividing, based on a preset angle, a circle, of which a center is the source base station and a radius is the preset radius; and
code for determining, according to the correspondence relationship between unit sectors and cells covered by the source base station, an estimated azimuth value of the cell covered by the source base station.

Optionally, the code for determining, according to the location information of the terminals and the identification information of the service cells of the terminals, a correspondence relationship between each unit sector and a cell covered by the source base station, includes:

code for determining, according to the location information of the terminals, terminals in each unit sector; and
code for determining, according to the identification information of service celleach service cell of the terminals, the correspondence relationship between each unit sector and a cell covered by the source base station, where the cell covered by the source base station and corresponding to a unit sector is a cell that serves a largest number of terminals in the unit sector.

Optionally, the code for determining, according to the correspondence relationship between unit sectors and cells covered by the source base station, an estimated azimuth value of the cell covered by the source base station, includes:

code for obtaining, according to the correspondence relationship between unit sectors and cells covered by the source base station, unit sectors within each cell covered by the source base station; and
code for determining, according to a formula

$$\overline{\alpha}i1 = \operatorname{atan}\left(\frac{1}{n}\sum_{j=1}^{n}\ \sin\alpha_j\ ,\ \ \frac{1}{n}\sum_{j=1}^{n}\ \cos\alpha_j\ \right),$$

an estimated azimuth value $\overline{\alpha}i1$ of an i$^{th}$ cell covered by the source base station, where n is the number of unit sectors within the i$^{th}$ cell covered by the source base station and $\alpha_j$ is an azimuth of a j$^{th}$ unit sector of the n unit sectors, where the azimuth of the unit sector is an angle between an angular bisector of the j$^{th}$ unit sector and due north in a clockwise direction.

Optionally, the multimedia memory may also store the following code:

code for obtaining the number of terminals in each unit sector that are served by an i$^{th}$ cell covered by the source base station; and
code for determining, according to the number of terminals that are served by the i$^{th}$ cell covered by the source base station, a weight value $w^i_j$ of terminals in a j$^{th}$ unit sector that are served by the i$^{th}$ cell covered by the source base station, so as to obtain a weight value of terminals in each unit sector that are served by each cell covered by the source base station, where $w^i_j = N^i_j/N^T_j$, where $N^i_j$ is the number of terminals in the j$^{th}$ unit sector that are served by the i$^{th}$ cell covered by the source base station and $N^T_j$ is the number of terminals in the j$^{th}$ unit sector that are served by all cells covered by the source base station.

Optionally, the code for determining, according to the correspondence relationship between unit sectors and cells covered by the source base station, an estimated azimuth value of the cell covered by the source base station, includes:

code for obtaining, according to the correspondence relationship between unit sectors and cells covered by the source base station, unit sectors within each cell covered by the source base station; and
code for determining, according to a formula

$$\overline{\alpha}i2 = \operatorname{atan}\left[\left(1/\sum_{j=1}^{n}\ w^i_j\right)\sum_{j=1}^{n}\ w^i_j\sin\alpha_j\ ,\ \left(1/\sum_{j=1}^{n}\ w^i_j\right)\sum_{j=1}^{n}\ w^i_j\cos\alpha_j\ \right],$$

an estimated azimuth value $\overline{\alpha}i2$ of an i$^{th}$ cell covered by the source base station, where n is the number of unit sectors within the i$^{h}$ cell covered by the source base station and $\alpha_j$ is an azimuth of a j$^{th}$ unit sector of the n unit sectors, where the azimuth of the j$^{th}$ unit sector is an angle between an angular bisector of the j$^{th}$ unit sector and due north in a clockwise direction.

Optionally, the code for determining, according to the correspondence relationship between unit sectors and cells covered by the source base station, an estimated azimuth value of the cell covered by the source base station, includes:

code for determining, according to correspondence relationship between unit sectors and cells covered by the source base station, an angle of a boundary between each two neighboring cells covered by the source base station, so as to obtain two boundary angles of each cell covered by source base station; and
code for determining an angular bisector of a sector that is formed by the two boundary angles as the estimated azimuth value of the cell covered by source base station.

Optionally, the multimedia memory may also store the following code:

obtaining, through an MR, the location information of the terminals and the identification information of the service cells of the terminals.

The foregoing only describes code stored in the multimedia memory through examples. Other steps described in the embodiments of the present invention can also be implemented through code. The foregoing code can be executed by a computer or a processor to obtain an estimated azimuth value. The foregoing multimedia memory may be included in a computer product

A person of ordinary skill in the art should understand that, all or a part of the steps of the foregoing method embodiments may be implemented by hardware, or by a program instructing relevant hardware. The foregoing programs may be stored in a computer readable storage medium. When the program runs, the steps of the foregoing method embodiments are performed. The foregoing storage medium includes various mediums capable of storing program code, such as a ROM, a RAM, a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An azimuth determining method, comprising:

taking a source base station as a circular center and obtaining location information of terminals within a preset radius and identification information of service cells of the terminals, wherein the service cells of the terminals are one of cells covered by the source base station;
determining, according to the location information of the terminals and the identification information of the service cells of the terminals, a correspondence relationship between each unit sector and a cell covered by the source base station, wherein the unit sectors are obtained by dividing, based on a preset angle, a circle, of which a center is the source base station and a radius is the preset radius; and
determining, according to the correspondence relationship between unit sectors and cells covered by the source base station, an estimated azimuth value of a cell covered by the source base station.

2. The method according to claim 1, wherein the determining, according to the location information of the terminals and the identification information of the service cells of the terminals, a correspondence relationship between each unit sector and a cell covered by the source base station specifically comprises:

determining, according to the location information of the terminals, terminals in each unit sector; and
determining, according to the identification information of each service cell of terminals, the correspondence relationship between each unit sector and a cell covered by the source base station, wherein a cell covered by the source base station and corresponding to each unit sector is a cell that serves a largest number of terminals in the unit sector.

3. The method according to claim 2, wherein the determining, according to the correspondence relationship between unit sectors and cells covered by the source base station, an estimated azimuth value of a cell covered by the source base station specifically comprises:

obtaining, according to the correspondence relationship between unit sectors and cells covered by the source base station, unit sectors within each cell covered by the source base station; and
determining, according to a formula

$$\overline{\alpha i 1} = \operatorname{atan}\left(\frac{1}{n}\sum_{j=1}^{n} \sin\alpha_j, \ \frac{1}{n}\sum_{j=1}^{n} \cos\alpha_j\right),$$

an estimated azimuth value $\overline{\alpha}i1$ of an $i^{th}$ cell covered by the source base station, wherein n is the number of unit sectors within the $i^{th}$ cell covered by the source base station and $\alpha_j$ is an azimuth of a $j^{th}$ unit sector of the n unit sectors, wherein the azimuth of the unit sector is an angle between an angular bisector of the $j^{th}$ unit sector and due north in a clockwise direction.

4. The method according to claim 2, wherein, after the determining, according to the location information of the terminals, terminals in each unit sector, the method further comprises:

obtaining the number of terminals in each unit sector that are served by an $i^{th}$ cell covered by the source base station; and
determining, according to the number of terminals that are served by the $i^{th}$ cell covered by the source base station, a weight value $w^i_j$ of terminals in a $j^{th}$ unit sector that are served by the $i^{th}$ cell covered by the source base station, so as to obtain a weight value of terminals in each unit sector that are served by each cell covered by the source base station, wherein $w^i_j = N^i_j/N^T_j$, wherein $N^i_j$ is the number of terminals in the $j^{th}$ unit sector that are served by the $i^{th}$ cell covered by the source base station and $N^T_j$ is the number of terminals in the $j^{th}$ unit sector that are served by all cells covered by the source base station.

5. The method according to claim 4, wherein the determining, according to the correspondence relationship between unit sectors and cells covered by the source base station, an estimated azimuth value of a cell covered by the source base station specifically comprises:

obtaining, according to the correspondence relationship between unit sectors and cells covered by the source base station, unit sectors within each cell covered by the source base station; and
determining, according to a formula

$$\overline{\alpha}i2 = \operatorname{atan}\left[ \left(1/\sum_{j=1}^{n} w^i_j\right) \sum_{j=1}^{n} w^i_j \sin\alpha_j \, , \, \left(1/\sum_{j=1}^{n} w^i_j\right) \sum_{j=1}^{n} w^i_j \cos\alpha_j \right],$$

an estimated azimuth value $\overline{\alpha}i2$ of the $i^{th}$ cell covered by the source base station, wherein n is the number of unit sectors within the $i^{th}$ cell covered by the source base station and $\alpha_j$ is an azimuth of the $j^{th}$ unit sector of the n unit sectors, wherein the azimuth of the $j^{th}$ unit sector is an angle between an angular bisector of the $j^{th}$ unit sector and due north in a clockwise direction.

6. The method according to claim 2, wherein the determining, according to the correspondence relationship between unit sectors and cells covered by the source base station, an estimated azimuth value of a cell covered by the source base station specifically comprises:

determining, according to the correspondence relationship between unit sectors and cells covered by the source base station, an angle of a boundary between each two neighboring cells covered by the source base station, so as to obtain two boundary angles of each cell covered by the source base station; and
determining an angular bisector of a sector that is formed by the two boundary angles as an estimated azimuth value of the cell covered by the source base station.

7. The method according to claim 1, wherein the location information of the terminals and the identification information of the service cells of the terminals are obtained through a measurement report.

8. An azimuth determining apparatus, comprising:

an information obtaining unit, configured to take a source base station as a circular center and obtain location information of terminals within a preset radius and identification information of service cells of the terminals, wherein the service cells of the terminals are one of cells covered by the source base station;
a correspondence relationship determining unit, configured to determine, according to the location information of the terminals and the identification information of the service cells of the terminals, a correspondence relationship between each unit sector and a cell covered by the source base station, wherein the unit sectors are obtained by dividing, based on a preset angle, a circle, of which a center is the source base station and a radius is the preset radius; and

an azimuth measuring unit, configured to determine, according to the correspondence relationship between unit sectors and cells covered by the source base station, an estimated azimuth value of a cell covered by the source base station.

9. The apparatus according to claim 8, wherein the correspondence relationship determining unit specifically comprises:

a terminal determining subunit, configured to determine, according to the location information of the terminals, terminals in each unit sector; and

a correspondence relationship determining subunit, configured to determine, according to the identification information of the service cells of the terminals, the correspondence relationship between each unit sector and a cell covered by the source base station, wherein a cell covered by the source base station and corresponding to each unit sector is a cell that serves a largest number of terminals in the unit sector.

10. The apparatus according to claim 9, wherein the azimuth measuring unit specifically comprises:

a unit sector obtaining subunit, configured to obtain, according to the correspondence relationship between unit sectors and cells covered by the source base station, unit sectors within each cell covered by the source base station; and

a first azimuth measuring subunit, configured to determine, according to a formula

$$\overline{\alpha i1} = \operatorname{atan}\left(\frac{1}{n}\sum_{j=1}^{n} \sin\alpha_j \,,\; \frac{1}{n}\sum_{j=1}^{n} \cos\alpha_j \right),$$

an estimated azimuth value $\overline{\alpha i1}$ of an $i^{th}$ cell covered by the source base station, wherein n is the number of unit sectors within the $i^{th}$ cell covered by the source base station and $\alpha_j$ is an azimuth of a $j^{th}$ unit sector of the n unit sectors, wherein the azimuth of the unit sector is an angle between an angular bisector of the $j^{th}$ unit sector and due north in a clockwise direction.

11. The apparatus according to claim 9, wherein the correspondence relationship determining unit further comprises:

a terminal number obtaining subunit, configured to obtain, after terminals in each unit sector are determined according to the location information of the terminals, the number of terminals in each unit sector that are served by an $i^{th}$ cell covered by the source base station; and

a weight value obtaining subunit, configured to determine, according to the number of terminals that are served by the $i^{th}$ cell covered by the source base station, a weight value $w^i_j$ of terminals in a $j^{th}$ unit sector that are served by the $i^{th}$ cell covered by the source base station, so as to obtain a weight value of terminals in each unit sector that are served by each cell covered by the source base station, wherein $w^i_j = N^i_j/N^T_j$, wherein $N^i_j$ is the number of terminals in the $j^{th}$ unit sector that are served by the $i^{th}$ cell covered by the source base station and $N^T_j$ is the number of terminals in the $j^{th}$ unit sector that are served by all cells covered by the source based station.

12. The apparatus according to claim 11, wherein the azimuth measuring unit specifically comprises:

a unit sector obtaining subunit, configured to obtain, according to the correspondence relationship between unit sectors and cells covered by the source base station, unit sectors within each cell covered by the source base station; and

a second azimuth measuring subunit, configured to determine, according to a formula

$$\overline{\alpha i2} = \operatorname{atan}\left[\left(1/\sum_{j=1}^{n} w^i_j\right)\sum_{j=1}^{n} w^i_j\sin\alpha_j \,,\; \left(1/\sum_{j=1}^{n} w^i_j\right)\sum_{j=1}^{n} w^i_j\cos\alpha_j \right],$$

an estimated azimuth value $\overline{\alpha i}2$ of the $i^{th}$ cell covered by the source base station, wherein n is the number of unit sectors within the $i^{th}$ cell covered by the source base station and $\alpha_j$ is an azimuth of the $j^{th}$ unit sector of the n unit sectors, wherein the azimuth of the $j^{th}$ unit sector is an angle between an angular bisector of the $j^{th}$ unit sector and due north in a clockwise direction.

13. The apparatus according to claim 9, wherein the azimuth measuring unit specifically comprises:

a boundary angle determining subunit, configured to determine, according to the correspondence relationship between unit sectors and cells covered by the source base station, an angle of a boundary between each two neighboring cells covered by the source base station, so as to obtain two boundary angles of each cell covered by the source base station; and
a third azimuth measuring subunit, configured to determine an angular bisector of a sector that is formed by the two boundary angles as an estimated azimuth value of the cell covered by source base station.

14. The method according to claim 8, wherein the information obtaining unit is specifically configured to obtain the location information of the terminals and the identification information of the service cells of the terminals through a measurement report.

North

02

01

FIG. 1

201

Take a source base station as a circular center and obtain location information
of terminals within a preset radius and identification information of service
cells of the terminals

202

Determine, according to the location information of the terminals and the
identifier information of the service cells of the terminals, a correspondence
relationship between each unit sector and a cell covered by the source base
station

203

Determine, according to the correspondence relationships between unit sectors
and cells covered by the source base station, an estimated azimuth value of a
cell covered by the source base station

FIG. 2

FIG. 3

401

Take a source base station as a circular center and obtain location information of terminals within a preset radius and identification information of service cells of the terminals

402

Determine, according to the location information of terminals, a terminal in each unit sector

403

Determine, according to the identification information of each service cell of terminals, a corresponding relationship between each unit sector and a cell covered by the source base station, where a cell covered by the source base station and corresponding to a unit sector is a cell that serves a largest quantity of terminals in the unit sector

404

Obtain, according to the corresponding relationship between unit sectors and cells covered by the source base station, unit sectors within each cell covered by the source base station

405

Determine an estimated azimuth value of each cell covered by the source base station

FIG. 4

512
513
51
50
501
502
503
511
514

FIG. 5

606
605
604
603
602
601
61
62
63

FIG. 6

701

Take a source base station as a circular center and obtain location information of terminals within a preset radius and identification information of service cells of the terminals

702

Determine, according to the location information of terminals, terminals in each unit sector

703

Obtain the number of terminals in each unit sector served by an $i^{th}$ cell covered by the source base station

704

Determine, according to the number of terminals served by the $i^{th}$ cell covered by the source base station, a weight value $w^i_j$ of terminals in a $j^{th}$ unit sector served by the $i^{th}$ cell covered by the source base station, so as to obtain a weight value of terminals in each unit sector served by each cell covered by the source base station

705

Determine, according to the identification information of each service cell of terminals, a corresponding relationship between each unit sector and a cell covered by the source base station, where a cell covered by the source base station and corresponding to a unit sector is a cell that serves a largest quantity of terminals in the unit sector

706

Obtain, according to the corresponding relationship between unit sectors and cells covered by the source base station, unit sectors within each cell covered by the source base station

707

Determine an estimated azimuth value of each cell covered by the source base station

FIG. 7

801

> Take a source base station as a circular center and obtain location information of terminals within a preset radius and identification information of service cells of the terminals

802

> Determine, according to the location information of terminals, terminals in each unit sector

803

> Determine, according to the identification information of each service cell of terminals, a corresponding relationship between each unit sector and a cell covered by the source base station

804

> Determine, according to the corresponding relationship between unit sectors and cells covered by the source base station, a boundary angle between each two neighboring cells covered by the source base station, so as to obtain two boundary angles of each cell covered by the source base station

805

> Determine an angular bisector of a sector that is formed by two boundary angles as an estimated azimuth value of a cell covered by the source base station

FIG. 8

FIG. 9

FIG. 10

FIG. 11

FIG. 12

FIG. 13

112 — Correspondence relationship
determining unit

1121 — Terminal determining
subunit

1122 — Correspondence relationship
determining subunit

1123 — Terminal number obtaining
subunit

1124 — Weight value obtaining
subunit

FIG. 14

113 — Azimuth measuring unit

1131 — Unit sector obtaining
subunit

1133 — Second azimuth measuring
subunit

FIG. 15

113 — Azimuth measuring unit

1134 — Boundary angle determining subunit

1135 — Third azimuth measuring subunit

FIG. 16

**EP 2 876 918 A1**

<div align="center">

## INTERNATIONAL SEARCH REPORT

</div>

| International application No. |
| --- |
| **PCT/CN2012/079068** |

**A. CLASSIFICATION OF SUBJECT MATTER**

H04W 16/28 (2009.01) i

According to International Patent Classification (IPC) or to both national classification and IPC

**B. FIELDS SEARCHED**

Minimum documentation searched (classification system followed by classification symbols)

IPC: H04W; G01S

Documentation searched other than minimum documentation to the extent that such documents are included in the fields searched

Electronic data base consulted during the international search (name of data base and, where practicable, search terms used)

CNKI, CNPAT, WPI, EPODOC: base station, identifier, antenna, azimuth, angle, station, terminal, sign, cell, sector

**C. DOCUMENTS CONSIDERED TO BE RELEVANT**

| Category* | Citation of document, with indication, where appropriate, of the relevant passages | Relevant to claim No. |
| --- | --- | --- |
| X | CN 102340785 A (ZTE CORP.), 01 February 2012 (01.02.2012), description, paragraphs 0019-0051, and figures 1, 4, 5 and 7 | 1, 2, 7-9, 14 |
| A | CN 101621817 A (BEIJING GREENNET COMMUNICATIONS TECHNOLOGIES CO., LTD. et al.), 06 January 2010 (06.01.2010), the whole document | 1-14 |
| A | US 2011/0065439 A1 (SPRINT SPECTRUM L.P.), 17 March 2011 (17.03.2011), the whole document | 1-14 |

☐ Further documents are listed in the continuation of Box C.      ☒ See patent family annex.

| | |
| --- | --- |
| \*    Special categories of cited documents: <br><br> "A"   document defining the general state of the art which is not considered to be of particular relevance <br><br> "E"   earlier application or patent but published on or after the international filing date <br><br> "L"   document which may throw doubts on priority claim(s) or which is cited to establish the publication date of another citation or other special reason (as specified) <br><br> "O"   document referring to an oral disclosure, use, exhibition or other means <br><br> "P"   document published prior to the international filing date but later than the priority date claimed | "T"   later document published after the international filing date or priority date and not in conflict with the application but cited to understand the principle or theory underlying the invention <br><br> "X"   document of particular relevance; the claimed invention cannot be considered novel or cannot be considered to involve an inventive step when the document is taken alone <br><br> "Y"   document of particular relevance; the claimed invention cannot be considered to involve an inventive step when the document is combined with one or more other such documents, such combination being obvious to a person skilled in the art <br><br> "&"   document member of the same patent family |
| Date of the actual completion of the international search <br><br> <div align="center">10 March 2013 (10.03.2013)</div> | Date of mailing of the international search report <br><br> <div align="center">**11 April 2013 (11.04.2013)**</div> |
| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> <div align="center">**SUN, Peng**</div> <br> Telephone No.: (86-10) **62413604** |

Form PCT/ISA/210 (second sheet) (July 2009)

# INTERNATIONAL SEARCH REPORT
## Information on patent family members

International application No.

**PCT/CN2012/079068**

| Patent Documents referred in the Report | Publication Date | Patent Family | Publication Date |
|---|---|---|---|
| CN 102340785 A | 01.02.2012 | WO 2012009933 A1 | 26.01.2012 |
| CN 101621817 A | 06.01.2010 | None | |
| US 2011/0065439 A1 | 17.03.2011 | US 7881263 B1 | 01.02.2011 |

Form PCT/ISA/210 (patent family annex) (July 2009)